# NEW EUROPEAN PATENT SPECIFICATION

(11) **EP 0 304 977 B2**
(45) Date of publication and mention of the opposition decision: **17.09.1997**
(45) Mention of the grant of the patent: 30.09.1992
(21) Application number: 88201606.6
(22) Date of filing: 26.07.1988
(51) Int. Cl.: A01F 15/14

(54) **Netting for wrapping round bales**
Netz zur Umhüllung von Rundballen
Filet pour l'enveloppement de balles rondes

(30) Priority: 24.08.1987 US 88456
(43) Date of publication of application: 01.03.1989
(73) Proprietor: FORD NEW HOLLAND, INC. (a Delaware corp.), New Holland Pennsylvania 17557 (US)
(72) Inventor: van Ginhoven, Robert M., Lancaster, PA 17601 (US)
(74) Representative: Feldkamp, Rainer, Dipl.-Ing.

(56) References cited:
- US-A- 4 152 479
- US-A- 4 190 692
- US-A- 4 569 439
- US-A- 4 570 789
- Prospectus CONWED "Tensionet Pallet Wrap"; drawings CLAAS Nr. 820-538.0; prospectus CLAAS "Round BALE SILAGE WITH CLAAS ROLLANT BALERS"; Aktennotiz Nr. 89, 24.10.1986 of POLYDRESS; Sonderdruck aus Lohnunternehmen, 40. Jahrgang, Mai 1985; Sonderdruck aus EILBOTE, Heft Nr. 8, 1986, Seite 18; Betriebsvorschriften "Polydress".

## Description

This invention relates to the use of netting for wrapping round bales of crop material.

Twine and plastic film are well known expedients used to wrap round bales. US-A-4.517.890 discloses such use of twine and US-A-4.409.784 discloses this use of plastic film. In addition, netting made of Raschel fabric also has been used for round bale wrapping as has been disclosed in US-A-4.569.439 US-A-4.570.789. and "Lohnunternehmen", 40, Jahrgang May 1985, Dr. U. Fritz "Netzbindung und Folienbindung" This type of netting is a warp knit material of coarse texture. Although Raschel fabric netting has several advantages over twine and plastic film, it also has two significant disadvantages. One of these disadvantages is that Raschel fabric netting is very difficult to cut. The other disadvantage of Raschel fabric netting is that it shrinks in overall width when pulled lengthwise. US-A-4 569 439 therefore requires that the netting is substantially inextensible in its length direction to avoid this shrinking. Later publications, like "Lohnunternehmen" mentioned above, indicate that a certain elasticity of the net is desireable to avoid ruptures of the netting on impact loads. The net MX 1000 mentioned in this publication may have had an elasticity before tensile failure of about 15%. Other types of netting also are commonly known as appears a.o. from US-A-4.152.479.

1. The present invention resides in the use of an extruded plastic netting comprising a plurality of longitudinal strands and a plurality of transverse strands; said longitudinal and transverse strands being arranged substantially perpendicular to each other and interconnected at a plurality of intersecting joints to define a plurality of substantially rectangular openings therebetween and said use being for wrapping the outer surface of a cylindrically shaped bale of crop material in its circumferential direction and in a manner so that said rectangular openings in said netting have their main dimensions, as defined by said longitudinal and transverse strands, oriented in the circumferential and axial directions of said bale, such that the spacing between longitudinal strands is smaller than the spacing between transverse strands, the rectangular openings in this netting being dimensioned so that, when the outer surface of said bale is wrapped with said netting, crop material in said outer surface of said bale pokes through said openings to thereby hold said bale together; said netting having, in the longitudinal direction, a minimum elasticity before tensile failure of about 15 %. The selected netting may be of the type as disclosed in US-A-4.152.479 and US-A-4.208.457 and preferably is an extruded plastic mesh formed of polyethylene or polypropylene and of which the longitudinal and transverse strands are fused together at the intersecting joints. The selected netting has a minimum elasticity in the longitudinal direction before tensile failure of about 15 %. This netting does not shrink in the transverse direction when it is pulled in the longitudinal direction and is easy to cut.

A netting used in accordance with the present invention for wrapping round bales of crop material will now be described in greater detail, by way of example, with reference to the accompanying drawings, in which :
Fig. 1 is a perspective view of a round bale of crop material;
Fig. 2 is a plan view of a section of prior art netting; and
Fig. 3 is a plan view of a section of improved netting according to the preferred embodiment of the present invention.

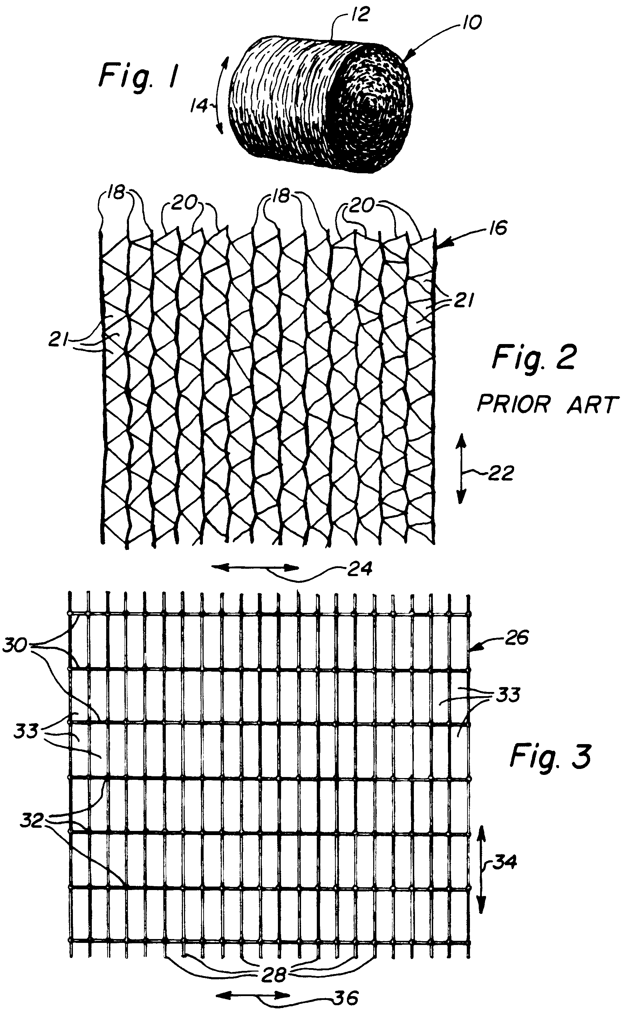

Referring to Fig. 1, a round bale 10 of crop material is illustrated. This round bale 10 is preferably formed of spirally wrapped layers of agricultural crops such as hay or straw. In order to hold this round bale 10 together after being formed, its outer surface 12 may be wrapped with twine, plastic film or netting in a circumferential direction 14.

Prior art netting 16 is shown in Fig. 2 and is formed of Raschel fabric which is a warp knit material of coarse texture. This netting 16 includes prestretched longitudinal strands 18 and transverse strands 20 loosely woven between these longitudinal strands 18 to define a plurality of irregular, generally triangularly shaped openings 21 therebetween. This arrangement of longitudinal strands 18 and transverse strands 20 causes the netting 16 to be substantially inextensible or unstretchable in its longitudinal direction 22 while being extensible or stretchable in its transverse direction 24. US-A-4.569.439 and US-A-4.570.789 disclose Raschel fabric netting with these characteristics. One problem encountered with using this netting 16 to wrap round bales 10 is that this netting 16 is difficult to cut due to a.o. the number and orientation of the transverse strands 20. Another problem with the use of this prior art netting 16 for wrapping round bales 10 is that this netting 16 shrinks in its transverse direction 24 and fails to maintain its original width dimension when pulled in longitudinal direction 22, thereby leaving parts of the outer surface 12 of round bales 10 unwrapped.

An improved netting 26 according to the preferred embodiment of the present invention is shown in Fig. 3. This netting 26 is an extruded plastic mesh formed of either polyethylene or polypropylene and which includes a plurality of longitudinal strands 28 and a plurality of transverse strands 30 arranged substantially perpendicularly to each other and fused together at a plurality of joints 32 to define a plurality of rectangularly shaped openings 33 in the netting 26. US-A-4.152.479 discloses one type of extruded plastic mesh netting. Although the longitudinal and transverse strands 28 and 30, respectively, of the improved netting 26 are stretched when the netting is manufactured, this netting 26 must have a minimum elasticity in a longitudinal direction 34 before tensile failure of about 15 %. Preferably this elasticity is in the range of 30 %. The tensile strength of the netting 26 in the longitudinal direction 34 preferably is at least in the range of 10 to 12 Newton per cm of width (i.e. 6 to 7 pounds per inch of width). Accordingly, a section of netting 26 that is 125 cm wide would have a tensile strength of 1250 to 1500 Newton in the longitudinal direction 34 (i.e. 300 to 350 pounds for a width of 50 inches). This netting may have a specific gravity in the range of 12 to 18 gram per meter.

When this netting 26 is wrapped in the circumferential direction 14 around the outer surface 12 of a round bale 10, it is pulled in the longitudinal direction 34 without any shrinking in a transverse direction 36 taking place. Therefore, the netting 26 maintains its original width dimension so that the entire outer surface 12 of the round bale 10 is wrapped with the netting 26 and no parts of the bale outer surface 12 are left unwrapped. When it is desired to cut off the netting 26 after the round bale 10 has been wrapped, the longitudinal strands 28 are easily severed intermediate a pair of transverse strands 30.

It will be understood that when a round bale 10 is wrapped with the netting 26, the longitudinal strands 28 thereof extend circumferentially and the transverse strands 30 thereof extend longitudinally of the round bale 10. Under normal conditions, it has been found satisfactory to cover the outer surface 12 of round bales 10 with a minimum of 1,5 to 2 circumferential wraps of the netting 26. However, preferably 2 to 4 full circumferential wraps of the netting 26 are applied for more security. The crop material in the outer surface 12 of a round bale 10 pokes through the openings 33 in the netting 26 causing this netting 26 to cling onto the outer surface 12 of the round bale 10. This holds the round bale 10 together without any additional fastening of the netting 26.

Various types of apparatus may be used for applying the netting 26 to the outer surface 12 of round bales 10. One such type of apparatus is disclosed in EP-A-289.091; EP-A-293.025 and EP-A-289.092 incorporated herein by reference.

## Claims

1. The use of an extruded plastic netting (26) comprising a plurality of longitudinal strands (28) and a plurality of transverse strands (30); said longitudinal and transverse strands (28, 30) being arranged substantially perpendicular to each other and interconnected at a plurality of intersecting joints (32) to define a plurality of substantially rectangular openings (33) therebetween and said use being for wrapping the outer surface of a cylindrically shaped bale (10) of crop material in its circumferential direction and in a manner so that said rectangular openings (33) in said netting (26) have their main dimensions, as defined by said longitudinal and transverse strands (28, 30), oriented in the circumferential and axial directions of said bale (10), such that the spacing between longitudinal strands is smaller than the spacing between transverse strands, the rectangular openings (33) in this netting (26) being dimensioned so that, when the outer surface of said bale (10) is wrapped with said netting (26), crop material in said outer surface of said bale (10) pokes through said openings (33) to thereby hold said bale (10) together; said netting (26) having, in the longitudinal direction, a minimum elasticity before tensile failure of about 15%.

2. The use of netting (26) according to any of the preceding claims wherein this netting (26) has sufficient elasticity in its longitudinal direction to thereby prevent shrinking in its transverse direction when the outer surface of said bale (10) is wrapped therewith.

3. The use of netting (26) according to any of the preceding claims wherein said netting (26) has, in the longitudinal direction, an elasticity before tensile failure in the range of 30 %.

4. The use of netting (26) according to claim 3 wherein said netting (26) has a minimum tensile strength in the longitudinal direction of about 10 Newton per centimetre of width.

5. The use of netting (26) according to any of the preceding claims wherein the longitudinal and transverse strands (28, 30) of said netting (26) are connected together by fusing at the intersecting joints (32).

6. The use of netting (26) according to any of the preceding claims wherein said netting (26) is formed by a plastic mesh of either polyethylene or polypropylene.

## Patentansprüche

1. Die Verwendung eines extrudierten Kunststoff-Netzmaterials (26) mit einer Vielzahl von sich in Längsrichtung erstreckenden Strängen (28) und einer Vielzahl von sich in Querrichtung erstreckenden Strängen (30), wobei die sich in Längsrichtung und in Querrichtung erstreckenden Stränge (28,30) im wesentlichen senkrecht zueinander angeordnet und an einer Vielzahl von Überkreuzungsstellen (32) miteinander verbunden sind, um eine Vielzahl von im wesentlichen rechtwinkligen Öffnungen (32) zwischen sich zu bilden, und wobei die Verwendung zum Umwickeln der Außenoberfläche eines zylindrisch geformten Ballens (10) aus Erntematerial in seiner Umfangsrichtung und in einer derartigen Weise dient, daß die rechtwinkligen Öffnungen (33) in dem Netzmaterial mit ihren Hauptabmessungen, die durch die längs- und querverlaufenden Stränge (28,30) festgelegt sind, in Umfangs- und Axialrichtung des Ballens (10) ausgerichtet sind, wobei die rechtwinkligen Öffnungen (33) in diesem Netzmaterial (26) derart bemessen sind, daß, wenn die Außenoberfläche des Ballens (10) mit dem Netzmaterial (26) umwickelt ist, Erntematerial in der Außenoberfläche des Ballens (10) durch die Öffnungen (33) hindurch vorspringt, um auf diese Weise den Ballen (10) zusammenzuhalten, und wobei das Netzmaterial in der Längsrichtung eine minimale Elastizität vor einem Reißen unter Zugbeanspruchung von ungefähr 15% aufweist.

2. Die Verwendung des Netzmaterials (26) nach einem der vorhergehenden Ansprüche, bei der dieses Netzmaterial (26) eine ausreichende Elastizität in seiner Längsrichtung aufweist, um ein Schrumpfen in Querrichtung zu verhindern, wenn die Außenoberfläche des Ballens (10) hiermit umwickelt wird.

3. Die Verwendung von Netzmaterial (26) nach einem der vorhergehenden Ansprüche, bei der das Netzmaterial (26) in Längsrichtung eine Elastizität vor einem Reißen unter Zugbeanspruchung im Bereich von 30% aufweist.

4. Die Verwendung von Netzmaterial (26) nach Anspruch 3, bei der das Netzmaterial (26) eine minimale Zugfestigkeit in Längsrichtung von ungefähr 10 Newton pro Zentimeter der Breite aufweist.

5. Die Verwendung von Netzmaterial (26) nach einem der vorhergehenden Ansprüche, bei der die Längs- und Querstränge (28,30) des Netzmaterials (26) miteinander durch Verschmelzen an den Überkreuzungspunkten (32) verbunden sind.

6. Die Verwendung von Netzmaterial (26) nach einem der vorhergehenden Ansprüche, bei der das Netzmaterial (26) durch ein Kunststoff-Maschenmaterial aus Polyäthylen oder Polypropylen gebildet ist.

## Revendications

1. Utilisation d'un filet en matière plastique extrudée (26) comprenant plusieurs torons longitudinaux (28) et plusieurs torons transversaux (30); lesdits torons longitudinaux et transversaux (28, 30) étant disposés sensiblement perpendiculairement les uns par rapport aux autres et reliés les uns aux autres au niveau de plusieurs joints d'intersection (32) pour définir entre eux plusieurs ouvertures sensiblement rectangulaires (33), ladite utilisation étant destinée à envelopper la surface extérieure d'une balle de configuration cylindrique (10) de produits de récolte dans sa direction circonférentielle et de façon que lesdites ouvertures rectangulaires (33) définies dans ledit filet (26) aient leurs dimensions principales définies par lesdits torons longitudinaux et transversaux (28, 30), orientées dans les directions circonférentielle et axiale de ladite balle (10), afin que l'espacement entre les torons longitudinaux soit inférieur à l'espacement entre les torons transversaux, les ouvertures rectangulaires (33) définies dans ledit filet (26) étant dimensionnées de façon que, lorsque la surface extérieure de ladite balle (10) est enveloppée au moyen dudit filet (26), des produits de récolte présents dans ladite surface extérieure de ladite balle (10) pointent à travers lesdites ouvertures (33), pour ainsi conserver sa cohésion à ladite balle (10); ledit filet (26) ayant, dans la direction longitudinale, une élasticité minimale avant rupture par traction égale à environ 15%.

2. Utilisation d'un filet (26), selon la revendication 1, dans laquelle ledit filet (26) possède une élasticité suffisante dans sa direction longitudinale, pour ainsi éviter un rétrécissement dans sa direction transversale, lorsque la surface extérieure de ladite balle (10) est enveloppée au moyen de celui-ci.

3. Utilisation d'un filet (26), selon la revendication 1 ou 2, dans laquelle ledit filet (26) possède, dans la direction longitudinale, une élasticité avant rupture par traction qui se situe dans la plage de 30%.

4. Utilisation d'un filet (26), selon la revendication 3, dans laquelle ledit filet (26) possède une résistance minimale à la traction dans la direction longitudinale, égale à environ 10 Newton par centimètre de largeur.

5. Utilisation d'un filet (26), selon l'une quelconque des revendications précédentes, dans laquelle les torons longitudinaux et transversaux (28, 30) dudit filet (26) sont reliés les uns aux autres par fusion au niveau des joints d'intersection (32).

6. Utilisation d'un filet (26) selon l'une quelconque des revendications précédentes, dans laquelle ledit filet (26) est formé par un maillage en matière plastique fait de polyéthylène ou de polypropylène.
